# EUROPÄISCHE PATENTSCHRIFT

(11) **EP 3 107 664 B1**
(45) Veröffentlichungstag und Bekanntmachung des Hinweises auf die Patenterteilung: **18.07.2018**
(21) Anmeldenummer: 16716453.2
(22) Anmeldetag: 09.03.2016
(51) Int. Cl.: B07C 5/342

(54) **AUSSORTIEREN VON MINERALIENHALTIGEN OBJEKTEN ODER KUNSTSTOFF-OBJEKTEN**
SORTING OF MATERIAL CONTAINING MINERALS OR OF PLASTIC OBJECTS
TRI DES OBJETS CONTENANT DES MINERAUX OU DES OBJETS EN MATIÈRE PLASTIQUE

(30) Priorität: 09.03.2015 AT 5003815 U
(43) Veröffentlichungstag der Anmeldung: 28.12.2016
(73) Patentinhaber: Binder + Co AG, 8200 Gleisdorf (AT)
(72) Erfinder: HUBER, Reinhold, 8280 Fürstenfeld (AT); TAUCHER, Reinhard, 8010 Graz (AT)
(74) Vertreter: KLIMENT & HENHAPEL
(86) Internationale Anmeldenummer: PCT/AT2016/050053
(87) Internationale Veröffentlichungsnummer: WO 2016/141398

(56) Entgegenhaltungen:
- WO-A1-2011/020628
- DE-A1-102010 030 908
- US-A1- 2013 274 914
- US-B1- 7 763 820

## Beschreibung

### GEBIET DER ERFINDUNG

Die vorliegende Erfindung bezieht sich auf ein Verfahren zum Aussortieren von mineralienhaltigen Objekten oder von Kunststoff-Objekten aus einem einschichtigen Materialstrom, sowie auf eine entsprechende Sortieranlage.

Mineralienhaltige Objekte können mineralische Zwischen- oder Endprodukte sein, wie Gesteinsbrocken, Gesteinsbruch, Steine, Sand, Erze, feuerfeste Werkstoffe (z.B. Hochofenausbruch). Ein bestimmtes Objekt kann dabei nur die gewünschten Mineralien bzw. Mineralphasen enthalten (man nennt dies auch das Wertmineral), teilweise die gewünschten Mineralien enthalten oder gar keine gewünschten Mineralien enthalten. Die Objekte können selbstverständlich verwachsen sein und auch mehrere unterschiedliche Mineralien bzw. Mineralphasen (z.B.: Flussspat/Schwerspat/Quarz) enthalten, und nur im Hinblick auf den Gehalt oder Anteil eines bestimmten Minerals (oder mehrerer bestimmter Materialien) sortiert werden.

Einschichtig bedeutet, dass die einzelnen Objekte nicht aufeinander, sondern nebeneinander liegen, sich also nicht großflächig überdecken. Am besten weisen die einzelnen Objekte einen Abstand zueinander auf, um von optischen Einrichtungen gut als einzelne Objekte erkannt zu werden.

Der Materialstrom kann ausschließlich aus mineralienhaltigen Objekten bestehen, es ist aber auch denkbar, dass der Materialstrom neben mineralienhaltigen Objekten auch andere Objekte enthält.

Das erfindungsgemäße Verfahren ist aber auch für die Sortierung von Kunststoffen bzw. Kunststoffabfällen geeignet. Dabei kann der einschichtige Materialstrom nur aus Kunststoffen bzw. Kunststoffabfällen bestehen und es werden Objekte aussortiert, die aus einem oder mehreren bestimmten Kunststoffen bestehen oder die einen oder mehrere Kunststoffe als Bestandteile enthalten. Selbstverständlich kann der einschichtige Materialstrom aber auch andere Objekte enthalten, die nicht aus Kunststoff sind.

Auch wenn es nicht ausgeschlossen ist, dass in einem Verfahren sowohl hinsichtlich bestimmter Mineralien als auch hinsichtlich bestimmter Kunststoffe sortiert wird, werden in der Praxis wohl entweder nur bestimmte Mineralien oder nur bestimmte Kunststoffe aussortiert.

### STAND DER TECHNIK

Bestimmte Eigenschaften von mineralischen Zwischen- oder Endprodukten, wie die Farbreinheit, der Störstoffgehalt oder der Weißheitsgrad, können mittels sichtbarem Licht und optischer Sensoren erfasst und für die Zwecke des Aussortierens verwendet werden.

Die einfache Erkennung der Oberflächenfarbe ist aber oft nicht einsetzbar, da keine ausreichende Korrelation von Oberflächenfarbe und gesuchter Eigenschaft, wie eben dem Gehalt oder Anteil an einem bestimmten Mineral, vorliegt. Alternativ können dann aufwändige Erkennungsverfahren wie Röntgenfluoreszenzanalyse, siehe hierzu z.B. US 7 763 820 B1, oder NIR(nahes Infrarot)-Spektroskopie angewendet werden.

Grundsätzlich ist bekannt, dass Mineralienvorkommen, deren Abbauprodukt aus Mineralien bzw. Mineralphasen besteht, Fluoreszenzeigenschaften aufweisen. So zeigen etwa Calzedon grüne Fluoreszenz, Fluorit blaue oder gelbe Fluoreszenz oder Kalzit rote Fluoreszenz. Die Fluoreszenz ist mit Ausnahme von wenigen Mineralien, wie etwa dem Wolframerz Scheelit, keine inhärente Eigenschaft der einzelnen Mineralien, sondern von der Genese abhängig und damit meist Lagerstätten-spezifisch. Eine spezifische Fluoreszenzeigenschaft ist im Wesentlichen durch die Kristallstruktur und Kristallgitterfehler definiert, in die Aktivatoren, wie Seltenerd-Elemente oder Übergangsmetalle, eingebaut sind.

Fluoreszenz wird daher auch für die Analyse von Mineralien, Mineralienvorkommen oder von mineralienhaltigen Gesteinen verwendet, z.B. bei der Laserinduzierten Fluoreszenz (engl. laser-induced fluorescence, LIF). Auch dieses Verfahren ist ein spektroskopisches Verfahren und wäre daher zu aufwändig und zeitintensiv, um bei industrieller Sortierung angewendet werden zu können.

Es ist auch bekannt, dass Kunststoffe Fluoreszenzeigenschaften aufweisen. Die US 2013/274914 A1 etwa betrifft das Sortieren von Kunststoffteilen, unter anderem von fluoreszierenden Plastikteilen, mittels Strahlung. Die DE 10 2010 030908 A1 wiederum zeigt ein Verfahren zur Klassifizierung von in Saatgut enthaltenen Objekten, wo die Fluoreszenzeigenschaft ermittelt wird. Aus der WO 2011/020628 A1 geht ein Verfahren und eine Vorrichtung zum Detektieren bleihaltiger Glasstücke in einem einlagigen Materialfluss von Objekten hervor, wobei die Gegenstände mit im wesentlichen monochromatischen UV-Licht bestrahlt werden. Die US 7763820 B1 offenbart ein Verfahren zum Sortieren von unter anderem metallischen Objekten mittels Röntgenfluoreszenz-Analyse und optischer Emissionsspektrometrie.

### DARSTELLUNG DER ERFINDUNG

Es ist daher eine Aufgabe der vorliegenden Erfindung, ein Verfahren und eine entsprechende Sortieranlage zur Verfügung zu stellen, wo Objekte, die ein bestimmtes Mineral oder einen bestimmten Kunststoff enthalten, in einem einschichtigen Materialstrom möglichst wenig aufwändig detektiert und von anderen Objekten, die weniger oder nichts von dem bestimmten Mineral bzw. Kunststoff enthalten, getrennt werden können.

Diese Aufgabe wird durch ein Verfahren gemäß Anspruch 1 so gelöst,
- dass Objekte des Materialstroms mit Anregungslicht bestrahlt werden und das daraus resultierende Fluoreszenzlicht in Form einer Abbildung der fluoreszierenden Stellen detektiert wird,
- dass die Objekte des Materialstroms mit Objekterkennungslicht außerhalb des Fluoreszenzlichts bestrahlt werden und das Transmissionslicht nach dem Durchgang zwischen den Objekten oder das Reflexionslicht der Objekte in Form einer Abbildung der einzelnen Objekte detektiert wird,
- dass ein Objekt dann als zumindest ein bestimmtes Mineral bzw. einen bestimmten Kunststoff enthaltend definiert wird, wenn Fluoreszenzlicht dieses Objekts für zumindest einen vorbestimmten Wellenlängenbereich in einem vorbestimmten Intensitätsbereich liegt, und
- dass derart definierte Objekte von anderen Objekten des Materialstroms getrennt werden.

Fluoreszenz kann durch UV-Licht angeregt werden, wobei das Fluoreszenzlicht dann in der Regel im sichtbaren Bereich liegt. Entsprechend kann vorgesehen sein, dass das Anregungslicht beim erfindungsgemäßen Verfahren UV-Licht ist.

Es gibt aber auch Materialien, bei denen Fluoreszenz durch sichtbares Licht angeregt wird. Entsprechend kann vorgesehen sein, dass das Anregungslicht beim erfindungsgemäßen Verfahren sichtbares Licht ist. So zeigen etwa Rubin oder Korund Fluoreszenz, wenn sie mit grünem Licht von ca. 550 nm Wellenlänge bestrahlt werden.

Es ist also ausreichend, die zu untersuchenden Objekte optisch abzubilden und einerseits in einer ersten Abbildung der fluoreszierenden Stellen zu untersuchen, ob diese die gewünschte Farbe (könnte z.B. mittels Filter vor einer optischen Kamera eingestellt werden) und die nötige Intensität aufweisen. Wenn dies zutrifft, dann entsprechen diese fluoreszierenden Stellen auf dem entsprechenden Objekt, das mit einer zweiten Abbildung definiert wird, einem Bereich des Objekts, welcher das bestimmte Mineral, nämlich das Wertmineral, bzw. den bestimmten Kunststoff enthält, dieses Objekt kann als werthaltig definiert und von den anderen Objekten getrennt werden. Die erste und zweite Abbildung enthalten in der Regel mehrere zu untersuchende Objekte.

Da jedes Wertmineral bzw. jeder auszusortierende Kunststoff von Licht einer bestimmten Wellenlänge am besten zur Fluoreszenz angeregt wird, ist das Anregungslicht entsprechend auszuwählen, beispielsweise durch entsprechende Lichtquellen. Wenn für ein bestimmtes Material der Anregungspeak bei einer bestimmten Wellenlänge liegt, z.B. bei 320 nm Lichtwellenlänge, wird das Anregungslichtintervall beispielsweise mit +/- 50 nm, also eben z.B. mit 270 - 370 nm, festgelegt.

Da die Wellenlänge des Fluoreszenzlichts bei Mineralien auch von der Lagerstätte der Mineralien abhängig ist, kann mittels Filter für das Anregungslicht und/oder mittels Filter für das zu detektierende Fluoreszenzlicht und/oder durch entsprechende Detektorwahl für das Fluoreszenzlicht (z.B. eine breitbandig empfindliche RGB-Kamera) eine Abstimmung auf die jeweilige Lagerstätte stattfinden.

Mittels Fluoreszenzanregung können etwa Art der Mineralien bzw. Mineralphasen, Verwachsungsverhältnisse und zumindest die oberflächlich sichtbaren Anteile von bestimmten Mineralien in mineralienhaltigen Objekten erkannt werden.

Die zweite Abbildung kann grundsätzlich mit jedem Licht erfolgen, geht es dabei doch nur darum, die einzelnen Objekte zu definieren. Diese zweite Abbildung kann entweder im Gegenlichtverfahren erstellt werden, wo das Transmissionslicht, das durch den Materialstrom gelangt, bzw. zwischen den Objekten des Materialstroms hindurch dringt, abgebildet wird. Oder die zweite Abbildung kann ebenfalls im Auflichtverfahren erstellt werden, wo das Reflexionslicht der Objekte abgebildet wird.

Das Objekterkennungslicht kann dabei (zusätzliches - falls UV-Licht bereits als Anregungslicht verwendet wird) UV-Licht umfassen, und/oder (zusätzliches - falls sichtbares Licht als Anregungslicht verwendet wird) sichtbares und/oder IR-Licht. Im Fall des zusätzlichen Lichts kann etwa eine - zur Anregungslichtquelle zur Erzeugung der Fluoreszenz - zusätzliche Lichtquelle vorgesehen sein. Diese zusätzliche oder zweite Lichtquelle kann hauptsächlich nur UV-Licht, nur sichtbares Licht oder nur Infrarotlicht aussenden. Es könnte auch eine Lichtquelle sein, die sowohl UV-Licht und sichtbares Licht aussendet, oder die sowohl sichtbares und IR-Licht aussendet. Die zusätzliche oder zweite Lichtquelle kann natürlich in der Praxis durch mehrere Lampen (Röhren, LEDs, ...) gebildet werden.

Um Lichtquellen einzusparen kann vorgesehen sein, dass das Anregungslicht auch als Objekterkennungslicht verwendet wird. Es muss dann keine eigene Lichtquelle vorgesehen werden, die das Objekterkennungslicht abgibt, sondern das Anregungslicht bzw. die Anregungslichtquelle, das bzw. die für die Anregung der Fluoreszenz verwendet wird, wird auch für die Objekterkennung verwendet. Dabei eröffnen sich grundsätzlich zwei Ausführungsmöglichkeiten: Erstens kann das von den Objekten reflektierte Anregungslicht von einem entsprechenden Detektor in Form einer Abbildung aufgenommen werden, dies entspricht einem Auflichtverfahren für die Objekterkennung. Zweitens kann das Anregungslicht als Transmissionslicht nach dem Durchgang zwischen den Objekten von einem entsprechenden Detektor in Form einer Abbildung aufgenommen werden, dies entspricht einem Gegenlichtverfahren für die Objekterkennung.

Um eine klare Unterscheidung zwischen transmittiertem oder reflektiertem Objekterkennungslicht einerseits und Fluoreszenzlicht andererseits zu haben, wird in der Regel das Objekterkennungslicht zumindest nicht im Wellenlängenbereich des zu erwartenden Fluoreszenzlichts liegen.

In der Regel werden die erste und die zweite Abbildung gleichzeitig angefertigt, weil die beiden Abbildungen dann direkt miteinander verglichen werden können. Eine geringe Zeitverzögerung zwischen der Aufnahme der ersten Abbildung und jener der zweiten Abbildung wäre jedoch auch möglich und könnte bei der Bildverarbeitung berücksichtigt bzw. ausgeglichen werden.

Die erste Abbildung mit der Information über die Fluoreszenz und die zweite Abbildung mit den geometrischen Eigenschaften der Objekte werden - in der Regel mit einer Bildverarbeitungssoftware - miteinander verknüpft, sofern sie von unterschiedlichen Detektoren erstellt worden sind, und verarbeitet, die Objekte klassifiziert und entsprechend den Sortierkriterien zeit- und ortsrichtig aussortiert.

Um die Anzahl der Detektoren möglichst gering zu halten und die Verarbeitung der Abbildungen zu vereinfachen, kann vorgesehen sein, dass das Fluoreszenzlicht einerseits und das Transmissions- oder Reflexionslicht des Objekterkennungslichts andererseits mit dem gleichen Detektor in Form einer gemeinsamen Abbildung erfasst werden. Voraussetzung dafür ist, dass sich das Fluoreszenzlicht vom Transmissions- oder Reflexionslicht des Objekterkennungslichts ausreichend unterscheidet und der Detektor in den entsprechenden Wellenlängenbereichen ausreichend empfindlich ist. So wäre es etwa denkbar, mit einer hochempfindlichen RGB-Kamera als einzigem Detektor pro Aufnahme eine Abbildung anzufertigen, die in einer Farbe bzw. einem Kanal, z.B. Blau, das Fluoreszenzlicht abbildet und in einer anderen Farbe bzw. einem anderen Kanal, z.B. Rot, das Transmissions- oder Reflexionslicht des Objekterkennungslichts.

Auf diese Weise muss zur Objekterkennung kein Abgleich zwischen einer ersten und einer zweiten Abbildung gemacht werden, sondern es gibt für jede Position der Objekte nur eine Abbildung, die sowohl die Information über die Fluoreszenz als auch die Information über die geometrischen Abmessungen und die Lage der Objekte enthält.

Ob beim Trennen die werthaltigen aus den nicht werthaltigen Objekten aussortiert werden oder umgekehrt, ist nicht wesentlich und hängt etwa davon ab, welche der beiden Fraktionen die größere Anzahl an Objekten aufweist oder wird durch qualitative Aspekte bestimmt. Das Aussortieren einer Fraktion kann etwa durch Ausblasdüsen mittels Druckluft erfolgen.

Nicht werthaltige Objekte werden also im vorbestimmten Wellenlängen- und Intensitätsbereich, der dem Fluoreszenzlicht der gewünschten Minerale bzw. Kunststoffe zugeordnet ist, keine oder nur eine geringe Intensität aufweisen.

Werthaltige Objekte werden im vorbestimmten Wellenlängen- und Intensitätsbereich, der dem Fluoreszenzlicht der gewünschten Minerale bzw. Kunststoffe zugeordnet ist, eine höhere Intensität aufweisen als nicht werthaltige Objekte.

Bei vielen Objekten wird das gewünschte Mineral bzw. der gewünschte Kunststoff nicht gleichförmig über das Objekt verteilt sein, sondern es wird Bereiche geben, die nur aus dem gewünschten Mineral bzw. Kunststoff bestehen und Bereiche, die das gewünschte Mineral bzw. den gewünschten Kunststoff gar nicht aufweisen. So kann etwa ein mineralisches Objekt beispielsweise einen Bereich aufweisen, der ganz aus dem gewünschten Mineral besteht, und einen weiteren Bereich, der ganz aus einem anderen Material besteht. Bei Kunststoff-Objekten, wie Kunststoffabfällen, könnte ebenso ein Objekt, z.B. ein oberer Teil einer Kunststoffflasche, zum Teil ganz aus einem gewünschten Kunststoff bestehen, z.B. der Flaschenhals selbst, und ein Teil aus einem anderen Kunststoff, z.B. der Drehverschluss, der noch auf den Flaschenhals aufgeschraubt ist.

Insofern kann vorgesehen sein, dass die Abbildung eines Objekts in mehrere Teilbereiche unterteilt wird und ein Teilbereich als ein bestimmtes Mineral (nämlich das Wertmineral) bzw. einen bestimmten Kunststoff enthaltend definiert wird, wenn das Fluoreszenzlicht aus diesem Teilbereich in einem vorbestimmten Wellenlängen- und Intensitätsbereich vorliegt. Denn dann besteht zumindest dieser Teilbereich aus dem gewünschten Mineral bzw. Kunststoff.

Das erfindungsgemäße Verfahren kann noch weiter verfeinert werden, indem auch der Mineralien- bzw. Kunststoffgehalt in einem einzelnen Objekt berücksichtigt wird. So kann es zum Beispiel erwünscht sein, nur solche Objekte als werthaltig zu definieren und weiterzuverarbeiten, die einen bestimmten Anteil an Wertmineral bzw. gewünschten Kunststoff überschreiten. Umso größer und/oder häufiger die fluoreszierenden Stellen in der Abbildung eines Objekts sind, umso mehr gewünschte Mineralien bzw. gewünschten Kunststoff wird dieses Objekt enthalten. Um also nur an Wertmineral bzw. gewünschtem Kunststoff relativ reiche Objekte zu erhalten, kann vorgesehen sein, Objekte mit nur wenigen oder kleinen sogenannten "Fluoreszenzspots" dennoch als nicht werthaltig zu definieren.

Insofern kann vorgesehen sein, dass ein Objekt als ein bestimmtes Mineral bzw. einen bestimmten Kunststoff enthaltend definiert wird, wenn die Summe der Teilbereiche, die das bestimmte Mineral bzw. den bestimmten Kunststoff enthalten, im Verhältnis zu einer Referenzfläche, wie der Gesamtfläche der Abbildung des Objekts, einen vorbestimmten Schwellwert der Intensität überschreitet. Es werden also beispielsweise die einen definierten Schwellwert überschreitenden Fluoreszenzbildpunkte (Fluoreszenzpixel) für ein Objekt in der Abbildung des Fluoreszenzlichts zusammengezählt und zur Fläche des Objekts, also der Anzahl der Bildpunkte des Objekts in der zweiten Abbildung, ins Verhältnis gesetzt. Nur wenn das Verhältnis einen vorbestimmten Wert überschreitet, wird das Objekt als werthaltig angesehen und in die entsprechende Fraktion sortiert.

Da die Fluoreszenz ein Oberflächeneffekt ist, erhält man bessere Ergebnisse, das heißt höhere Intensitäten des Fluoreszenzlichts, wenn das Fluoreszenzlicht im Auflicht-Verfahren gemessen wird. Das heißt, Anregungslichtquelle bzw. Anregungslicht und Detektor für Fluoreszenzlicht befinden sich auf der gleichen Seite des Objekts. Aber auch die Messung des Fluoreszenzlichts im Gegenlichtverfahren hat Vorteile, wobei sich hier der Detektor auf der gegenüberliegenden Seite der Anregungslichtquelle befindet und das durch das Objekt durchtretende und vom Objekt abgestrahlte Fluoreszenzlicht misst. Das Gegenlichtverfahren kann aber nur angewendet werden, wenn die Objekte für das Fluoreszenzlicht durchlässig sind, was bei vielen Mineralien bzw. mineralischen Zwischen- oder Endprodukten aber nicht der Fall ist.

Natürlich ist auch eine Kombination von Auflicht- und Gegenlicht-Detektoren zum Detektieren des Fluoreszenzlichts möglich.

Von Vorteil ist, wenn aufgrund der Intensität des Fluoreszenzlichts im vorherbestimmten Intensitätsbereich für ein bestimmtes Mineral bzw. einen bestimmten Kunststoff enthaltende Objekte eine weitere Unterteilung dieser Objekte bezüglich Mineraliengehalt bzw. Kunststoffgehalt vorgenommen wird. So könnten zumindest zwei Klassen von werthaltigen Objekten herausgefiltert werden, eine mit geringerem und eine mit höherem Mineraliengehalt bzw. Kunststoffgehalt. Dies ist besonders gut beim Auflicht-Verfahren möglich, weil hier die Intensitäten grundsätzlich höher sind.

Eine Ausführungsform der Erfindung sieht vor, dass das Anregungslicht und/oder das zusätzliche Licht gepulst werden. Die Objekte werden also nicht kontinuierlich beleuchtet, sondern das zusätzliche Licht wird nur eingeschaltet, wenn die Abbildung detektiert wird. Dies hat den Vorteil, dass insgesamt weniger Energie verbraucht wird als bei kontinuierlicher Beleuchtung der Objekte, wobei trotzdem für die kurzzeitige Beleuchtung höhere Intensitäten verwendet werden können als bei kontinuierlicher Beleuchtung und dadurch auch schwach fluoreszierende Mineralien detektiert werden können.

Die Sortieranlage zur Durchführung des erfindungsgemäßen Verfahrens ist dadurch gekennzeichnet, dass diese zumindest umfasst:
- eine Anregungslichtquelle, mit welcher ein einschichtiger Materialstrom von Objekten beleuchtet werden kann,
- einen ersten Detektor zum Detektieren des durch die Anregungslichtquelle im Objekt erzeugten Fluoreszenzlichts in Form einer Abbildung,
- eine Einrichtung zum Erstellen einer Abbildung der einzelnen Objekte,
- eine Einrichtung zum Herstellen eines einschichtigen Materialstroms aus Objekten, mit welcher der Materialstrom an der Anregungslichtquelle vorbeigeführt werden kann, sowie
- eine Einrichtung zum Aussortieren, die dann ein Objekt als ein bestimmtes Mineral bzw. einen bestimmten Kunststoff enthaltend definiert und von anderen Objekten des Materialstroms trennt, wenn das Fluoreszenzlicht dieses Objekts für zumindest einen vorbestimmten Wellenlängenbereich in einem vorbestimmten Intensitätsbereich liegt.

Die Einrichtung zum Erstellen einer Abbildung der einzelnen Objekte kann dabei Folgendes umfassen:
- eine zweite Lichtquelle, die UV-Licht und/oder sichtbares und/oder IR-Licht außerhalb des Fluoreszenzlichts aussenden kann, und/oder
- einen zweiten Detektor zum Detektieren des Transmissionslichts der gegebenenfalls zweiten Lichtquelle oder der Anregungslichtquelle, nach dem Durchgang zwischen den Objekten, oder zum Detektieren des Reflexionslichts der durch die gegebenenfalls zweite Lichtquelle oder der Anregungslichtquelle bestrahlten Objekte.

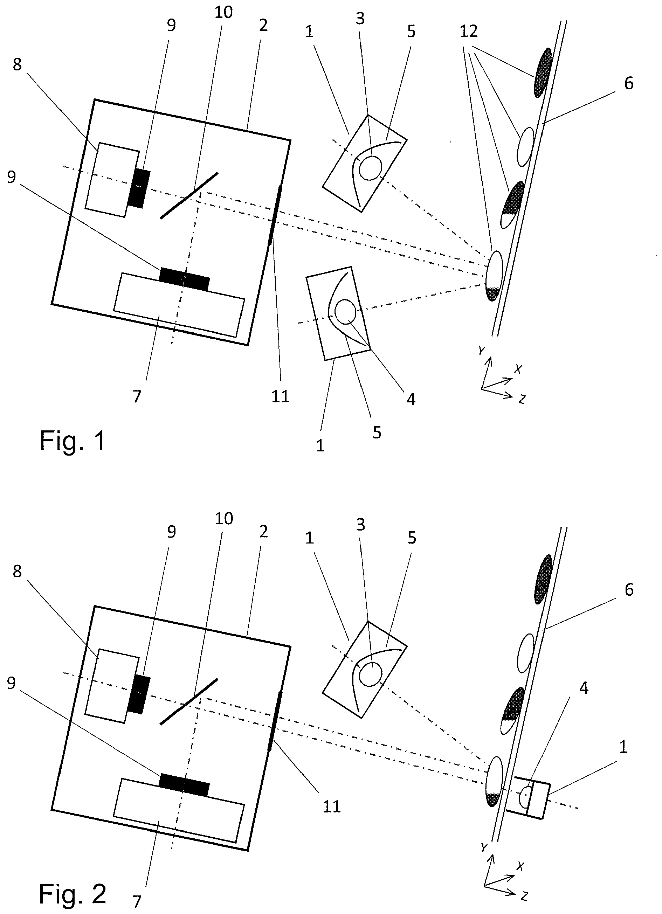

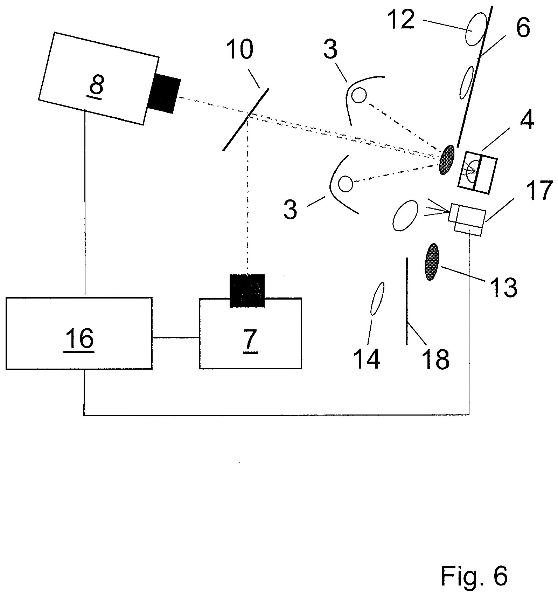

Sowohl erster als auch zweiter Detektor können als optische Kamera ausgeführt sein, z.B. als Zeilen- oder Flächenkamera. Die Einrichtung zum Herstellen eines einschichtigen Materialstroms kann z.B. ein Förderband sein, oder eine im Betriebszustand der Sortieranlage schräg ausgerichtete Platte, die bei Verwendung des Gegenlichtverfahrens entsprechend lichtdurchlässig sein muss (siehe Fig. 2) oder die sonst unmittelbar vor dem Detektionsbereich enden muss (siehe Fig. 6).

Zur Ausführung des Auflichtverfahrens für das Fluoreszenzlicht kann vorgesehen sein, dass sich Anregungslichtquelle und der erste Detektor auf der gleichen Seite des Materialstroms befinden.

Um das Anregungslicht im Fall von UV-Licht auch für die Objekterkennung verwenden zu können, kann vorgesehen sein, dass der zweite Detektor ein Detektor für UV-Licht ist.

Um unter Verwendung eines einzigen Detektors sowohl die Fluoreszenz als auch die geometrischen Eigenschaften der Objekte erkennen zu können, kann eine zweite Lichtquelle vorgesehen sein, die sichtbares und/oder IR-Licht aussenden kann. Denn dann kann sowohl das Fluoreszenzlicht als auch das transmittierte oder reflektierte Objekterkennungslicht (ursprünglich ausgesendet von der zweiten Lichtquelle) gleichzeitig mit dem selben Detektor aufgenommen werden. Der Begriff "unter Verwendung eines einzigen Detektors" schließt nicht aus, dass mehrere gleichartige Detektoren, z.B. nebeneinander, verwendet werden, von denen jeder sowohl das Fluoreszenzlicht als auch das transmittierte oder reflektierte Objekterkennungslicht detektieren kann, etwa, wenn die gesamte Breite des Materialstroms nicht mit einem einzigen Detektor erfasst werden kann. Auch die als erster und zweiter Detektor bezeichneten Einrichtungen können in der Praxis jeweils aus mehreren gleichartigen Detektoren gebildet werden, wenn dies etwa aufgrund der Breite des Materialstroms notwendig ist.

Aus den genannten bevorzugten Ausführungsformen für die erfindungsgemäße Sortieranlage ergeben sich zumindest die folgenden Anordnungen von Lichtquellen und Detektoren, wobei mit "Objektseite" immer jene Seite der Einrichtung zum Herstellen eines einschichtigen Materialstroms (z.B. Förderband, Platte, Rutsche) gemeint ist, auf der sich die zu sortierenden Objekte befinden:
Erste Anordnung:
   - zumindest eine Anregungslichtquelle für das Anregungslicht, auf der Objektseite
   - zumindest ein Detektor für Fluoreszenzlicht, auf der Objektseite (Auflichtverfahren)
   - zumindest eine zweite Lichtquelle für das Objekterkennungslicht, auf der Objektseite
   - zumindest ein zweiter Detektor für das reflektierte Objekterkennungslicht auf der Objektseite (Auflichtverfahren), siehe hierzu Fig. 1.
Zweite Anordnung:
   - zumindest eine Anregungslichtquelle für das Anregungslicht, auf der Objektseite
   - zumindest ein Detektor für Fluoreszenzlicht, auf der Objektseite (Auflichtverfahren)
   - zumindest eine zweite Lichtquelle für das Objekterkennungslicht, gegenüber der Objektseite
   - zumindest ein zweiter Detektor für das transmittierte Objekterkennungslicht, der zweiten Lichtquelle gegenüber liegend, also auf der Objektseite (Gegenlichtverfahren), siehe hierzu Fig. 2.
Dritte Anordnung:
   - zumindest eine Anregungslichtquelle für das Anregungslicht, auf der Objektseite
   - zumindest ein Detektor für Fluoreszenzlicht, auf der Objektseite (Auflichtverfahren)
   - zumindest eine zweite Lichtquelle für das Objekterkennungslicht, auf der Objektseite
   - zumindest ein zweiter Detektor für das transmittierte Objekterkennungslicht, der zweiten Lichtquelle gegenüber liegend, also gegenüber der Objektseite (Gegenlichtverfahren).
Vierte Anordnung:
   - zumindest eine Anregungslichtquelle (UV- und/oder sichtbares Licht) für das Anregungslicht und für das Objekterkennungslicht, auf der Objektseite
   - zumindest ein Detektor für Fluoreszenzlicht, auf der Objektseite (Auflichtverfahren)
   - (keine zweite Lichtquelle für das Objekterkennungslicht)
   - zumindest ein zweiter Detektor für das transmittierte Objekterkennungslicht, also das Licht der Anregungslichtquelle, entweder der Anregungslichtquelle gegenüber liegend, also gegenüber der Objektseite (Gegenlichtverfahren), oder auf der Objektseite (Auflichtverfahren).
Fünfte Anordnung:
   - zumindest eine Anregungslichtquelle für das Anregungslicht, auf der Objektseite
   - eine zweite Lichtquelle für das Objekterkennungslicht, gegenüber der Objektseite
   - zumindest ein Detektor, auf der Objektseite, zum gemeinsamen Detektieren von Fluoreszenzlicht (Auflichtverfahren) und von zwischen den Objekten transmittiertem Objekterkennungslicht (Gegenlichtverfahren)
   - (kein zweiter Detektor nur für das transmittierte Objekterkennungslicht).
Sechste Anordnung:
   - zumindest eine Anregungslichtquelle für das Anregungslicht, auf der Objektseite
   - eine zweite Lichtquelle für das Objekterkennungslicht, auch auf der Objektseite
   - zumindest ein Detektor, auf der Objektseite, zum gemeinsamen Detektieren von Fluoreszenzlicht (Auflichtverfahren) und von reflektiertem Objekterkennungslicht (Auflichtverfahren)
   - (kein zweiter Detektor nur für das reflektierte Objekterkennungslicht).

Um die erfindungsgemäße Vorrichtung möglichst platzsparend auszuführen, kann vorgesehen sein, dass sich Anregungslichtquelle und gegebenenfalls zweite Lichtquelle in einem gemeinsamen Gehäuse befinden, falls sich beide auf der gleichen Seite der Einrichtung zum Herstellen eines einschichtigen Materialstroms befinden, und/oder dass sich erster und gegebenenfalls zweiter Detektor in einem gemeinsamen Gehäuse befinden, falls sich beide auf der gleichen Seite der Einrichtung zum Herstellen eines einschichtigen Materialstroms befinden.

Um im Falle von UV-Licht als Anregungslicht unerwünschte Wellenlängen, insbesondere jene des sichtbaren Lichts, aus dem Spektrum der UV-Lichtquelle eliminieren zu können, sollte das UV-Licht gefiltert werden. Hierzu kann vorgesehen sein, dass die UV-Lichtquelle so in ein Gehäuse mit zumindest einem Spiegelfilter eingebaut ist, dass das Licht aus der UV-Lichtquelle über zumindest einen Spiegelfilter umgelenkt und gefiltert wird, insbesondere durch zwei normal zueinander angeordnete Spiegelfilter um 180° umgelenkt wird.

Das erfindungsgemäße Verfahren kann im industriellen Maßstab nur mit Computerunterstützung ausgeführt werden, insbesondere unter Verwendung bildverarbeitender Programme zur Definition der einzelnen Objekte. Somit könnte auch ein Computerprogrammprodukt, welches ein Programm umfasst und direkt in einen Speicher eines zentralen Rechners einer Sortieranlage ladbar ist, Programm-Mittel aufweisen, um alle Schritte des Verfahrens auszuführen, wenn das Programm vom zentralen Rechner ausgeführt wird. Das Programm kann beispielsweise auf einem Datenträger, auf einem Speichermedium oder einem anderen computerlesbaren Medium gespeichert sein oder als Signal über eine Datenverbindung zur Verfügung gestellt werden.

Insbesondere wird das Programm die Abbildung der fluoreszierenden Stellen und die Abbildung der einzelnen Objekte verarbeiten und ein Objekt dann als zumindest ein bestimmtes Mineral bzw. einen bestimmten Kunststoff enthaltend definieren, wenn Fluoreszenzlicht dieses Objekts für zumindest einen vorbestimmten Wellenlängenbereich in einem vorbestimmten Intensitätsbereich liegt, und das Programm wird veranlassen, dass derart definierte Objekte von anderen Objekten des Materialstroms getrennt werden. Weiters könnte das Programm auch die Verfahrensschritte der Ansprüche 5, 6 und 8 durchführen.

### KURZE BESCHREIBUNG DER FIGUREN

Die Erfindung wird nun anhand schematischer Figuren näher erläutert, die Ausführungsbeispiele einer erfindungsgemäßen Vorrichtung darstellen. Es kommt für das Anregungslicht jeweils das Auflichtverfahren zur Anwendung, das heißt, Anregungslichtquelle und Detektor für Fluoreszenzstrahlung sind auf der gleichen Seite des Materialstroms angeordnet.
Fig. 1 zeigt eine erfindungsgemäße Sortieranlage unter Verwendung des Auflichtverfahrens für beide Lichtquellen,
Fig. 2 zeigt eine erfindungsgemäße Sortieranlage unter Verwendung des Auflichtverfahrens für eine UV-Lichtquelle als Anregungslichtquelle und des Gegenlichtverfahrens für die zweite Lichtquelle,
Fig. 3 zeigt eine Abbildung des Fluoreszenzlichts für eine bestimmte Anordnung von Objekten,
Fig. 4 zeigt eine Abbildung des Reflexions-/Transmissionslichtes der weiteren Lichtquelle für die Anordnung der Objekte aus Fig. 3,
Fig. 5 zeigt eine Abbildung der Objekte, der fluoreszierenden Anteile sowie deren Lage, also eine Überlagerung der Fig. 3 und 4,
Fig. 6 zeigt eine Variante einer erfindungsgemäßen Sortieranlage mit einer alternativen Anordnung der Einrichtung zur Vereinzelung des Materialstroms und der Sensorkomponenten mit pneumatischer Trenneinrichtung,
Fig. 7 zeigt ein Diagramm, wo die Intensität von Anregungslicht und Fluoreszenzlicht in Abhängigkeit von der Wellenlänge dargestellt ist.

### WEGE ZUR AUSFÜHRUNG DER ERFINDUNG

In Fig. 1 sind in einem ersten Gehäuse 1 für Lichtquellen eine UV-Lichtquelle 3 und in einem zweiten Gehäuse 1 für Lichtquellen eine zweite Lichtquelle 4 eingebaut.

Die UV-Lichtquelle 3 kann hier UVC-Licht im Bereich von 200 bis 280 nm aussenden, insbesondere mit einer maximalen Intensität bei einer Wellenlänge von 254 nm. Die Lichtintensität kann am Ort der Objekte 12 etwa bei 1,0 bis 1,5 mW/cm² liegen. Die UV-Lichtquelle 3 kann in Form einer UVC-Leuchte ausgeführt sein, die auch UVC Leuchtstofflampe oder UVC Leuchtstoffröhre genannt wird. Die UV-Lichtquelle 3 kann hier aber auch UVA-Licht im Bereich von 330 bis 400 nm aussenden, insbesondere mit einer maximalen Intensität bei einer Wellenlänge von 366 nm. Die Lichtintensität kann am Ort der Objekte 12 etwa bei 1,0 bis 1,5 mW/cm² liegen. Die UV-Lichtquelle 3 kann in Form einer UVA-Leuchte ausgeführt sein, die auch UVA- Leuchtstofflampe oder UVA Leuchtstoffröhre genannt wird. Oder die UV-Lichtquelle 3 kann - etwa in Form einer Leuchtstofflampe oder Leuchtstoffröhre - UVB-Licht im Bereich von 280-330 nm aussenden, insbesondere mit einer maximalen Intensität bei einer Wellenlänge von 312 nm, ebenfalls mit einer Lichtintensität am Ort der Objekte 12 etwa bei 1,0 bis 1,5 mW/cm².

Ebenso können statt einer UV-Röhre auch eine oder mehrere UV-LEDs (eine sogenannte LED-Line) zur Anwendung kommen. Derzeit sind jedenfalls UVA-LEDs mit einer Wellenlänge von ca. maximal 360 nm verfügbar, mit welchen eine deutlich höhere Lichtintensität am Ort der Objekte 12 von etwa 5,0 bis 8,0 mW/cm² erreicht werden kann.

UVC- und UVB-LEDs sind noch sehr teuer und nur in begrenzten Stückzahlen und mit verhältnismäßig geringer Lichtintensität erhältlich.

Die zweite Lichtquelle 4 kann hier Licht im sichtbaren Bereich (400- 780 nm Wellenlänge) und/oder im Infrarotbereich (780 - 1100 nm Wellenlänge) aussenden. Sendet die zweite Lichtquelle 4 sichtbares Licht aus, so sollte dieses auch außerhalb des zu erwartenden Fluoreszenzlichts, das durch die UV-Lichtquelle 3 hervorgerufen wird, liegen. Das Fluoreszenzlicht kann typischer Weise im sichtbaren Blau liegen, also bei 400 - 500 nm. Die zweite Lichtquelle 4 kann etwa - wie in diesem Beispiel - als Leuchtstofflampe (VIS-Leuchte) mit Wellenlängen im sichtbaren und infraroten Bereich von 520 - 1100 nm ausgeführt sein. Statt einer Lampe (VIS-Leuchte) können auch eine oder mehrere Farb- und/oder Infrarot-LEDs (LED-Line) verwendet werden.

LEDs haben gegenüber Röhrenleuchten mehrere Vorteile:
- bessere Regelbarkeit der Intensität
- höhere Intensität
- viele unterschiedliche und auch enge Wellenlängenbereiche möglich
- Beleuchtungsbreite (LED-Line) bzw. beleuchtete Fläche durch Anordnung mehrerer LEDs frei wählbar
- Vorgabe eines Intensitätsprofils möglich

Der Nachteil, zumindest von LEDs im UV-C-Bereich, sind die derzeit hohen Anschaffungskosten und der höhere Diffusierungsaufwand im Vergleich zu Röhrenleuchten.

Die beiden Lichtquellen 3, 4 könnten auch in einem gemeinsamen Gehäuse angeordnet sein, müssten dann darin aber durch eine lichtundurchlässige Trennwand voneinander getrennt sein.

Im gegenständlichen Beispiel in Fig. 1 emittiert eine UV-C-Leuchte 3 UV-C-Strahlung mit einer maximalen Intensität typischerweise bei einer Wellenlänge von 254 nm und ist so im Gehäuse 1 eingebaut, dass das UV-Licht durch einen hinter der UV-C-Leuchte 3 angeordneten Reflektor 5 in Richtung zu den Objekten 12 hin geleitet wird. Das UV-Licht kann noch einen Filter durchlaufen, der einen Großteil des von der UV-C-Leuchte 3 emittierten Lichts im sichtbaren Bereich absorbiert und somit nahezu kein sichtbares Licht im Wellenlängenbereich des Fluoreszenzlichts zu den Detektoren 7, 8 leitet. Würde nämlich etwa blaues Licht von der UV-C-Leuchte 3 zum Detektor 7 für Fluoreszenzlicht gelangen, würde dieses als Fluoreszenzstrahlung detektiert werden, wenn diese ebenfalls im Bereich des blauen Lichts liegt.

Das von der zweiten Lichtquelle 4 emittierte VIS-Licht kann ebenfalls einen Filter durchlaufen, der emittiertes Licht im UV- und fluoreszierenden Bereich (< 500 nm) absorbiert.

Das Gehäuse 1 der UV-C-Leuchte 3 besteht zumindest im Bereich des UV-Lichtdurchtritts aus einer Quarzglasscheibe. Quarzglas weist eine hohe Durchlässigkeit für UV-C-Licht auf.

Eine Quarzglasscheibe oder Platte aus entsprechend lichtdurchlässigem Material, wie etwa Normalglas, Borofloat®-Glas oder Plexiglas, kann aber auch den Lichtdurchtritt des sichtbaren Lichts abdecken.

Die Glasscheibe 6 dient als Rutsche für die zu untersuchenden Objekte 12. Sie weist - im montierten Zustand der erfindungsgemäßen Vorrichtung - eine Neigung von etwa 25° gegenüber der Senkrechten auf. Auf ihr rutschen die Objekte 12 nach unten und werden dabei von den beiden Lichtquellen 3, 4 beleuchtet. Wesentlich ist, dass die Materialien für die Rutsche und etwaige Lichtdurchtrittsabdeckungen nicht selbst fluoreszieren.

Der Abstand zwischen dem zu detektierenden Fluoreszenzlicht und dem zu detektierenden Reflexionslicht (aus zweiter Lichtquelle 4) sollte möglichst gering (bevorzugt deckungsgleich) sein, damit beide Detektoren 7, 8, jener für Fluoreszenz- und jener für Reflexionslicht, ein möglichst übereinstimmendes Bild der bewegten Objekte 12 abbilden können. Der Abstand zwischen den Mittelachsen der Lichtstrahlen (strichpunktiert dargestellt) des sichtbaren/IR Lichts bzw. des UV-Lichts, wenn diese aus dem jeweiligen Gehäuse 1 austreten, beträgt in diesem Beispiel etwa 25 mm.

Sowohl das von den Objekten 12 reflektierte sichtbare/IR Licht der VIS-Leuchte 4 als auch die gegebenenfalls durch das UV-Licht induzierte Fluoreszenzstrahlung im blauen sichtbaren Bereich gelangen durch ein Schutzglas 11 in das weitere Gehäuse 2 für Detektoren, wo einerseits ein Detektor 7 zum Detektieren des Fluoreszenzlichts angebracht ist, und wo andererseits auch ein Detektor 8 zum Detektieren des Reflexionslichts der zweiten Lichtquelle 4 angeordnet ist.

Das Schutzglas 11 besteht aus Normalglas oder Borofloat®-Glas und schützt den Innenraum von Gehäuse 2 vor Staub und UV-C Strahlung.

Der Detektor 7 zum Detektieren des Fluoreszenzlichts ist in einem Wellenlängenbereich von 350-1000 nm empfindlich, die Empfindlichkeit kann durch Filter auf den relevanten Wellenlängenbereich weiter verengt werden. Der Detektor 7 wird in der Regel als Kamera ausgebildet sein. Er kann zum Beispiel als sogenannte TDI-Kamera ausgebildet sein.

Um eine Störung der Detektion des Fluoreszenzlichts durch eine weitere Lichtquelle in diesem Wellenlängenbereich zu vermeiden, darf die zweite Lichtquelle 4 möglichst nur Licht außerhalb dieses Frequenzbereichs ausstrahlen. In der Praxis ist es oft so, dass selbst Lichtquellen im gelben oder roten Bereich, die also per Definition "Licht im sichtbaren Bereich oder IR-Licht außerhalb des Wellenlängenbereichs des Fluoreszenzlichts aussenden" noch einen Blauanteil im Licht haben, und dieser dann gegebenenfalls herausgefiltert werden muss, wie oben beim Filter für die zweite Lichtquelle 4 erläutert.

Zur Detektion des Reflexionslichts aus der zweiten Lichtquelle 4 ist es grundsätzlich ausreichend, wenn ein Detektor 8, also etwa eine Kamera, zumindest ein Bild von Objekten in Grauschattierungen liefern kann. Daraus kann dann einerseits die Lage und Form des Objekts 12 bestimmt werden, die notwendig ist, um das Objekt gegebenenfalls mittels nachgeordneter Austrageinrichtungen aus dem Materialstrom zu entfernen. Zusätzlich kann die abgebildete Fläche des einzelnen Objekts 12 bestimmt werden, zu welcher dann die fluoreszierenden Bereiche des einzelnen Objekts ins Verhältnis gesetzt werden können.

Der Detektor 8, in der Regel eine Kamera, ist daher zumindest in jenem Wellenlängenbereich empfindlich, in dem die zweite Lichtquelle 4 Licht aussendet. In diesem Beispiel wird eine sogenannte RGB-Kamera verwendet. Bei dieser wird ein RGB-Signal verarbeitet, also die Farben Rot, Grün und Blau jeweils in einem eigenen Kanal übertragen beziehungsweise gespeichert.

Zur Detektion des Fluoreszenzlichts ist grundsätzlich ein hoch empfindlicher Detektor notwendig, in der Regel eine Kamera, in diesem Ausführungsbeispiel wurde eine sogenannte TDI-Kamera 7 verwendet. Diese enthält, wie die RGB-Kamera, einen CCD-Sensor, allerdings enthält dieser TDI (Time Delay Integration) Elemente, die besonders empfindlich sind und dennoch gute Aufnahmen von bewegten Objekten liefern.

Beide Detektoren 7, 8 verfügen über Objektive 9 zur Einstellung der optischen Eigenschaften.

Sowohl Fluoreszenzlicht als auch reflektiertes Licht treffen auf einen Strahlteiler 10, der blaues Licht, etwa im Wellenlängenbereich von 400-500 nm, möglichst vollständig reflektiert sowie sichtbares Licht >500 nm (reflektiertes Licht) möglichst vollständig durchlässt. Der reflektierte Lichtstrahl wird in die TDI-Kamera 7 geleitet, der durchgelassene Lichtstrahl in die RGB-Kamera 8.

Die detektierten Daten werden einer nicht dargestellten Auswerte- und Steuereinheit zugeleitet, welche die Auswertung der beiden Abbildungen vornimmt und die einzelnen Objekte den verschiedenen Fraktionen zuordnet und die Austrageinheiten steuert, welche die Objekte in die entsprechenden Container verbringt.

In Fig. 2 wird das Auflichtverfahren nur für die UV-Lichtquelle 3, jedoch das Gegenlichtverfahren für die zweite Lichtquelle 4 angewendet. Um Unterschied zu Fig. 1 ist also die zweite Lichtquelle 4 auf der anderen Seite der Glasscheibe 6 angeordnet, das Licht der Lichtquelle 4 dient also als Hintergrundbeleuchtung. Die Ausführung und Anordnung der Lichtquellen 3, 4 und der Detektoren 7, 8 entspricht sonst im Wesentlichen jenen aus Fig. 1, jedoch sendet die zweite Lichtquelle 4 NIR-Licht im Bereich von 650 - 850 nm aus und ist als LED-Line ausgeführt, der Detektor 7 für Fluoreszenzlicht kann sichtbares Licht im Bereich von 400 - 650 nm detektieren und der Detektor 8 für das transmittierte Objekterkennungslicht kann rotes und infrarotes Licht im Bereich von 650 -900 nm detektieren.

Denkbar wäre es auch, zwei UV-Lichtquellen 3 mit unterschiedlichen Bestrahlungswinkeln zur besseren Ausleuchtung der Objekte 12 vorzusehen, wie dies in Fig. 6 dargestellt ist.

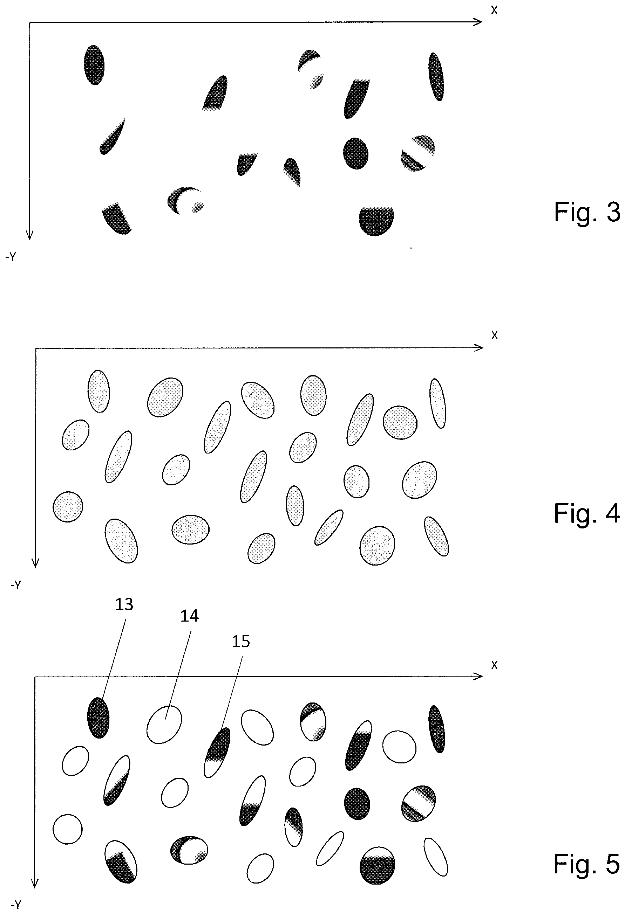

Die Fig. 3 und 4 zeigen jeweils zweidimensionale Abbildungen von Objekten 12, die in der Regel aus eindimensionalen Bildzeilen generiert werden. Jeder Detektor 7, 8 erfasst dabei eindimensionale Bildzeilen, also Bildzeilen, die quer zur Bewegungsrichtung der Objekte 12 verlaufen. Diese Bildzeilen werden mit hoher Taktrate, meist zwischen 1 und 20 kHz, aufgenommen und zu einem zweidimensionalen Abbild, in Form einer einzigen Abbildung bzw. einem fortlaufenden Film, des Materialstroms zusammengesetzt.

Fig. 3 zeigt einen Aufnahmeausschnitt der Fluoreszenzlichtabbildung des Materialstroms bzw. von bestimmten Objekten 12, die sich zu einem bestimmten Zeitpunkt durch den Detektionsbereich des Detektors 7 auf der Rutsche 6 in Fig. 1 bzw. Fig. 2 bewegt haben, also in der xy-Ebene gemäß dem in Fig. 1 bzw. Fig. 2 eingezeichneten Koordinatensystem. Dabei entsprechen die x-Richtung der Breitenrichtung der Rutsche 6 und die negative y-Richtung der Bewegungsrichtung der Objekte 12. Die Bewegungsgeschwindigkeit der Objekte 12 beträgt zwischen 1 und 2 m/s. Bildzeilen werden laufend mit einer Taktrate zwischen 1 und 20 kHz vom Detektor 7 aufgenommen und geblockt bzw. als Aufnahmeausschnitt abgespeichert. Die Aufnahmeausschnitte umfassen zwischen 100 und 2000 Bildzeilen, sodass jedes Objekt 12 in zumindest einem Aufnahmeausschnitt bzw. einer Abbildung auf der Rutsche 6 zu sehen ist.

Auch ein Film der Objekte wird in, insbesondere überlappende, Abschnitte zerteilt und diese Abschnitte werden dann von der Bildverarbeitungssoftware weiterverarbeitet.

Jene Stellen, wo Fluoreszenz auftritt, sind dunkelgrau dargestellt. Jene Stellen, wo keine Fluoreszenz auftritt, erscheinen in dieser Aufnahme weiß, also die Rutsche 6 selbst und jene Objekte 12 und Bereiche von Objekten 12, die nicht aus fluoreszierenden Materialien bestehen, genauer gesagt, die keine Fluoreszenz in einem vom Detektor 7 zu erfassenden Wellenlängenbereich aufweisen. Die Objekte 12 selbst sind in Fig. 3 in der Regel nicht erkennbar.

Zur Definition der Objekte ist Fig. 4 heranzuziehen, die eine - gleichzeitig erstellte - Abbildung der gleichen Objekte 12 zeigt, wobei hier zumindest die geometrische Form, in hellgrau dargestellt, erkennbar ist. Diese Abbildung wird durch eine Aufnahme mittels des Detektors 8 erstellt.

Die Erstellung der Abbildung erfolgt in gleicher Weise wie bei Detektor 7, also durch Detektion eindimensionaler Bildzeilen und Zusammensetzen der Bildzeilen durch eine Bildverarbeitungssoftware, und mit ähnlicher, insbesondere gleicher, Taktrate. Dabei ist natürlich eine Synchronisation der Bildzeilen der beiden Detektoren 7, 8 sinnvoll, um orts- und zeitrichtig die Bilddaten miteinander kombinieren und verarbeiten zu können.

Durch Auswertung der beiden Abbildungen aus Fig. 3 und 4, wie in Fig. 5 dargestellt, kann bestimmt werden, welches Objekt 12 wie viele und wie große Bereiche mit Fluoreszenz und damit Wertmineral bzw. gewünschtem Kunststoff enthält, zusätzlich kann auch die Intensität der Fluoreszenz abgelesen werden. Es können darüber hinaus die fluoreszierende Fläche eines Objekts (aus der ersten Abbildung, Fig. 3) und die Gesamtfläche des Objekts (aus der zweiten Abbildung, Fig. 4) bestimmt werden und diese Flächen zwecks Auswertung zueinander ins Verhältnis gesetzt werden.

So besteht etwa das gesamte Objekt 13 aus einem ersten Mineral bzw. Kunststoff, nämlich jenem, das im betrachteten Wellenlängenbereich Fluoreszenz aufweist. Das Objekt 14 besteht zur Gänze aus einem zweiten Mineral bzw. Kunststoff, das bzw. der im betrachteten Wellenlängenbereich keine Fluoreszenz aufweist. Das Objekt 15 schließlich besteht teilweise aus einem ersten, fluoreszierenden Mineral bzw. Kunststoff und teilweise aus einem zweiten, nicht fluoreszierenden Mineral bzw. Kunststoff.

Die Belichtungszeit für den Detektor 7 für das Fluoreszenzlicht liegt beispielsweise in der Größenordnung von 100 bis 1000 Mikrosekunden, die Belichtungszeit für den Detektor 8 für das sichtbare oder IR-Licht liegt in der gleichen Größenordnung oder ist um einen einstelligen Faktor kleiner und kann auch unter 100 Mikrosekunden liegen. Damit ist eine höhere Bildzeilenrate bzw. aufgelöste Abbildung erzielbar.

Fig. 6 zeigt eine Variante einer erfindungsgemäßen Sortieranlage, ähnlich zu Fig. 2, jedoch mit einer alternativen Einrichtung zum Herstellen eines einschichtigen Materialstroms. Auch in Fig. 6 wird das Auflichtverfahren für die UV-Lichtquellen 3 angewendet und das Gegenlichtverfahren für die zweite Lichtquelle 4. Zwei UV-Lichtquellen 3 mit unterschiedlichen Bestrahlungswinkeln, symmetrisch zur optischen Achse (strichpunktiert dargestellt) der Detektoren 7, 8 angeordnet, tragen zur besseren Ausleuchtung der Objekte 12 bei.

Im Unterschied zu Fig. 1 und 2 ist in Fig. 6 die schräg ausgerichtete Glasscheibe 6 verkürzt ausgebildet. Die Hintergrundbeleuchtung in Form der Lichtquelle 4, genauer gesagt der Bereich, wo deren Licht auf die Objekte 12 trifft, sowie der Anregungsbereich, wo das UV-Licht der UV-Lichtquelle 3 auf die Objekte 12 trifft, sind in Bewegungsrichtung der Objekte 12 (von oben nach unten in Fig. 6) nach der Glasscheibe 6 vorgesehen, also unterhalb der unteren Kante der Glasplatte 6.

Dies hat den Vorteil, dass kein lichtdurchlässiges Plattenmaterial erforderlich ist, und dass die Betrachtung der Objekte 12 im freien Fall günstiger für die verschiedenen Positionierungsvarianten von Lichtquellen und Detektoren ist. Insbesondere wäre dann eine zweiseitige Fluoreszenzerkennung besser möglich, also es könnte auf beiden Seiten des Materialstroms ein Detektor 7 für Fluoreszenzlicht vorgesehen werden, was bei - für UV-Licht undurchlässige Objekte - wiederum den Vorteil hätte, dass auch das Vorhandensein von Wertmineral bzw. gewünschtem Kunststoff auf der anderen Seite der Objekte untersucht werden kann.

Der Nachteil der verkürzten Platte ist, dass die Objekte 12 kürzer geführt werden, was vor allem bei kleinen Objekten eine negative Auswirkung auf die Austragseffizienz haben kann.

Die Ausführung und Anordnung der Lichtquellen 3, 4 und der Detektoren 7, 8 entspricht sonst im Wesentlichen jenen aus Fig. 2, die zweite Lichtquelle 4 sendet NIR-Licht im Bereich von 650 - 850 nm aus und ist als LED-Line ausgeführt, der Detektor 7 für Fluoreszenzlicht kann sichtbares Licht im Bereich von 400 - 650 nm detektieren und der Detektor 8 für das transmittierte Objekterkennungslicht kann rotes und infrarotes Licht im Bereich von 650 -850 nm detektieren.

In Fig. 6 ist zusätzlich die Verbindung der Detektoren 7, 8 zu einer Auswerte- und Steuereinheit 16 dargestellt, in der Regel ein Computer, der z.B. den zentralen Rechner einer Sortieranlage bilden kann, und der das erfindungsgemäße Computerprogramm ausführt. Diese Auswerte- und Steuereinheit 16 setzt die Bildzeilen der Detektoren 7, 8 zu Abbildungen zusammen und führt die erfindungsgemäße Auswertung durch, wie in Zusammenhang mit den Fig. 3-5 erläutert.

In Abhängigkeit von dieser Auswertung werden die Austrageinheiten angesteuert, wie in diesem Fall eine oder mehrere Ausblasdüsen 17. Diese sind unterhalb der Glasplatte 6 (bzw. einer Platte aus nicht durchsichtigem Material) und unterhalb des Bereichs, wo die Objekte 12 bestrahlt werden, angeordnet. Objekte 13 (oder zusätzlich auch Objekte 15), die ausreichend von einem ersten Mineral, dem Wertmineral, (bzw. von einem gewünschten Kunststoff) enthalten, fallen ungestört nach unten in einen Bereich rechts von einer Trennwand 18. Objekte 14, die nichts (oder nicht ausreichend viel) von einem ersten Mineral, dem Wertmineral, (bzw. dem gewünschten Kunststoff) enthalten, sondern ganz (oder großteils) aus einem zweiten Mineral (bzw. Kunststoff) bestehen, werden durch die Ausblasdüsen 17 angeblasen und in einen zweiten Bereich links von der Trennwand 18 abgelenkt.

Es wäre auch denkbar, die Objekte 12 in drei Fraktionen zu trennen, wobei die werthaltigen Objekte weiter unterteilt werden in eine Fraktion mit hohem Anteil an Wertmineral bzw. gewünschtem Kunststoff, wie Objekt 13 in Fig. 5, und eine Fraktion mit niedrigem Anteil an Wertmineral bzw. gewünschtem Kunststoff, wie Objekt 15 in Fig. 5.

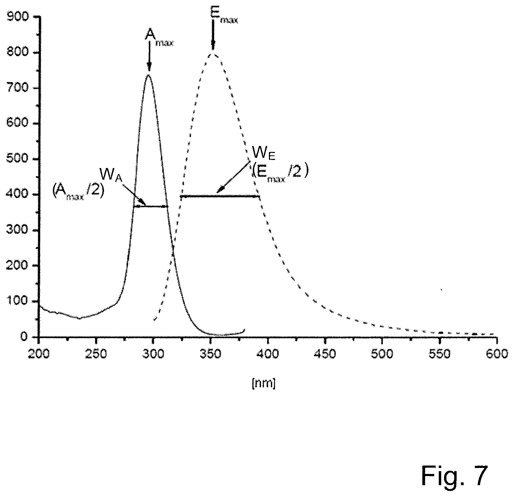

Fig. 7 zeigt ein Diagramm, wo auf der waagrechten Achse die Wellenlänge des Lichts in nm aufgetragen ist und auf der senkrechten Achse die relative Intensität des Lichts. Die durchgehende Linie stellt das Anregungslicht A dar, während die unterbrochene Linie das Fluoreszenzlicht E darstellt. Es ist jeweils nur der Intensitätsverlaufs dargestellt, der den Peak enthält. Die Darstellung betrifft ein bestimmtes Material, und man erhält maximale Intensität der Fluoreszenz bei Wellenlänge Eₘₐₓ, wenn die Anregung mit einer Wellenlänge erfolgt, die der Spitze des Anregungspeaks Aₘₐₓ entspricht.

Die Spitze Aₘₐₓ des Anregungspeaks des Anregungslichts A liegt in diesem Beispiel bei einer Wellenlänge von 300 nm. Jene Wellenlängen, bei denen die Intensität auf die Hälfte der Spitze Aₘₐₓ abgefallen sind, definieren die Breite W_{A} des Anregungspeaks. Innerhalb dieser Breite sollte das Anregungslicht beim erfindungsgemäßen Verfahren liegen, damit das Fluoreszenzlicht ausreichende, nämlich detektierbare, Fluoreszenz zeigt. Die Wellenlängen, welche die Breite W_{A} des Anregungspeaks festliegen, sind hier 280 nm und 320 nm, die Breite W_{A} des Anregungspeaks beträgt also 40 nm bzw. relativ zur Spitze Aₘₐₓ +/- 20 nm.

Die Spitze Eₘₐₓ des Fluoreszenzpeaks des Fluoreszenzlichts E liegt in diesem Beispiel bei einer Wellenlänge von 350 nm. Jene Wellenlängen, bei denen die Intensität auf die Hälfte der Spitze Eₘₐₓ abgefallen sind, definieren die Breite W_{E} des Fluoreszenzpeaks. Innerhalb dieser Breite sollte das Fluoreszenzlicht beim erfindungsgemäßen Verfahren detektiert werden, damit eine ausreichende Intensität vorliegt. Die Wellenlängen, welche die Breite W_{E} des Fluoreszenzpeaks festliegen, sind hier 325 nm und 390 nm, die Breite W_{A} des Anregungspeaks beträgt also 65 nm bzw. relativ zur Spitze Eₘₐₓ + 40/- 25 nm.

Beispiele für Paare von Anregungs- und Fluoreszenzpeaks für bestimmte Materialien sowie für die Tatsache, dass die Wellenlänge des Fluoreszenzlichts bei bestimmten Mineralien auch von der Lagerstätte der Mineralien abhängig sein kann, können der folgenden Tabelle entnommen werden.

Dabei ist in der ersten Spalte das jeweilige Material angeführt, also das Mineral oder der Kunststoff. In der zweiten Spalte ist die Anregungswellenlänge bzw. der - wellenlängenbereich, in dem eine Anregung erfolgen soll, angeführt, wobei entsprechend Fig. 7 auch die Breite W_{A} des Anregungspeaks in Form einer positiven und negativen Differenz zur Anregungswellenlänge (der Spitze = dem Hauptpeak) angeführt ist. In der dritten Spalte ist die Emissionswellenlänge (Wellenlänge des Fluoreszenzlichts) bzw. der -wellenlängenbereich angeführt, in dem eine Fluoreszenz detektiert werden kann, wobei entsprechend Fig. 7 auch die Breite W_{E} des Fluoreszenzpeaks in Form einer positiven und negativen Differenz zur Emissionswellenlänge (der Spitze = dem Hauptpeak) angeführt ist.

| Material (Mineral, Kunststoff) | Anregungswellenlänge bzw. -wellenlängenbereich (Hauptpeak, +/-Delta bei Hauptpeak/2) | Emissionswellenlänge bzw. - wellenlängenbereich (Hauptpeak, +/-Delta bei Hauptpeak/2) |
|---|---|---|
| Schellit (Wolfram) - Österreich | 254nm | 430nm +80 / -50 |
| Fluorit - Deutschland | 366nm | 425nm +20 / -10 |
| Fluorit - Türkei | 366nm | 500nm +100 / -80 |
| Rubin, Korund - Mozambique | 410nm +30 / -30 | 690nm +10 / -5 |
| | 565nm +40 / -50 | |
| Kalzit (Kalkstein) - Indonesien | 254nm | 620nm +50 / -70 |
| | 366nm | 620nm +40 / -70 |
| Kalzit (Kalkstein) - Österreich | 254nm | 440nm +140 / -50 |
| | 366nm | 560nm +90 / -80 |
| Kalzit (Kalkstein) - Norwegen | 254nm | 615nm +65 / -45 |
| | 366nm | 600nm +60 / -40 |
| Magnesit - Brasilien | 366nm | 640nm +40 / -40 |
| Magnesit - Türkei | 254nm | 465nm +105 / -75 |
| Apatit (Konzentration) | 254nm | 500nm +40 / -35 |
| PET | 254nm | 400nm +30 / -45 |
| PE-HD | 254nm | 405nm +35 / -30 |
| PP | 254nm | 405nm +80 / -30 |

Bei manchen Materialien, wie Kalzit, ist die Anregung der Fluoreszenz bei zwei unterschiedlichen Wellenlängen möglich, es gibt also zwei Anregungspeaks. Es gibt dann entweder einen (siehe Rubin, Korund) oder ebenfalls zwei Fluoreszenzpeaks (siehe Kalzit).

Sollten die in der Tabelle angeführten Daten für ein bestimmtes, zu sortierendes Material noch nicht (oder nicht ausreichend genau) bekannt sein, so wäre vor Durchführung des erfindungsgemäßen Verfahrens eine Spektralvermessung mit schmalbandiger Anregung, z.B. in Schritten von 1-10 nm, durchzuführen, um die Wellenlängen und Intensitäten für das Anregungslicht und das zu detektierende Fluoreszenzlicht festzulegen.

Die in der Tabelle angeführten Peak-Wellenlängen sind fluoreszenz-aktiv und für industriell gut verfügbare Anregungslichtquellen charakteristisch.

### Bezugszeichenliste:

- 1: Gehäuse für Lichtquelle
- 2: Gehäuse für Detektoren
- 3: Anregungslichtquelle (UV-Lichtquelle (UV-C-Leuchte))
- 4: Zweite Lichtquelle (VIS-Leuchte)
- 5: Reflektor
- 6: Glasscheibe (Rutsche)
- 7: Detektor zur Detektion des Fluoreszenzlichts (TDI-Kamera)
- 8: Detektor zur Detektion des Objekterkennungslichts (RGB-Kamera)
- 9: Objektiv
- 10: Strahlteiler
- 11: Schutzglas
- 12: Objekt
- 13: Objekt aus erstem Mineral bzw. Kunststoff
- 14: Objekt aus zweitem Mineral bzw. Kunststoff
- 15: Objekt enthaltend erstes und zweites Mineral bzw. enthaltend ersten und zweiten Kunststoff
- 16: Auswerte- und Steuereinheit (Einrichtung zum Aussortieren)
- 17: Ausblasdüse (Einrichtung zum Aussortieren)
- 18: Trennwand (Einrichtung zum Aussortieren)

- A: Anregungslicht
- Aₘₐₓ: Spitze des Anregungspeaks
- E: Fluoreszenzlicht
- Eₘₐₓ: Spitze des Fluoreszenzpeaks
- W_{A}: Breite des Anregungspeaks
- W_{E}: Breite des Fluoreszenzpeaks

## Patentansprüche

1. Verfahren zum Aussortieren von mineralienhaltigen Objekten oder von Kunststoff-Objekten aus einem einschichtigen Materialstrom, wobei Objekte (12) des Materialstroms mit Anregungslicht bestrahlt werden und das daraus resultierende Fluoreszenzlicht in Form einer Abbildung der fluoreszierenden Stellen detektiert wird, wobei die Objekte des Materialstroms mit Objekterkennungslicht außerhalb des Fluoreszenzlichts bestrahlt werden und das Transmissionslicht nach dem Durchgang zwischen den Objekten oder das Reflexionslicht der Objekte in Form einer Abbildung der einzelnen Objekte detektiert wird,
wobei ein Objekt dann als zumindest ein bestimmtes Mineral bzw. einen bestimmten Kunststoff enthaltend definiert wird, wenn Fluoreszenzlicht dieses Objekts für zumindest einen vorbestimmten Wellenlängenbereich in einem vorbestimmten Intensitätsbereich liegt, und wobei derart definierte Objekte von anderen Objekten des Materialstroms getrennt werden.

2. Verfahren nach Anspruch 1, **dadurch gekennzeichnet, dass** das Anregungslicht UV-Licht ist.

3. Verfahren nach Anspruch 1, **dadurch gekennzeichnet, dass** das Anregungslicht sichtbares Licht ist.

4. Verfahren nach einem der Ansprüche 1 bis 3, **dadurch gekennzeichnet, dass** das Objekterkennungslicht zusätzliches UV-Licht umfasst, und/oder sichtbares und/oder IR-Licht.

5. Verfahren nach einem der Ansprüche 1 bis 4, **dadurch gekennzeichnet, dass** das Anregungslicht auch als Objekterkennungslicht verwendet wird.

6. Verfahren nach Anspruch einem der Ansprüche 1 bis 5, **dadurch gekennzeichnet, dass** das Fluoreszenzlicht einerseits und das Transmissions- oder Reflexionslicht des Objekterkennungslichts andererseits mit dem gleichen Detektor in Form einer gemeinsamen Abbildung erfasst werden.

7. Verfahren nach einem der Ansprüche 1 bis 6, **dadurch gekennzeichnet, dass** die Abbildung eines Objekts in mehrere Teilbereiche unterteilt wird und ein Teilbereich als ein bestimmtes Mineral bzw. einen bestimmten Kunststoff enthaltend definiert wird, wenn das Fluoreszenzlicht aus diesem Teilbereich in einem vorbestimmten Wellenlängen- und Intensitätsbereich liegt.

8. Verfahren nach Anspruch 7, **dadurch gekennzeichnet, dass** ein Objekt als ein bestimmtes Mineral bzw. einen bestimmten Kunststoff enthaltend definiert wird, wenn die Summe der Teilbereiche, die das bestimmte Mineral bzw. den bestimmten Kunststoff enthalten, im Verhältnis zu einer Referenzfläche, wie der Gesamtfläche der Abbildung des Objekts, einen vorbestimmten Schwellwert der Intensität überschreitet.

9. Verfahren nach einem der Ansprüche 1 bis 8, **dadurch gekennzeichnet, dass** aufgrund der Intensität des Fluoreszenzlichts im vorherbestimmten Intensitätsbereich für ein bestimmtes Mineral bzw. einen bestimmten Kunststoff enthaltende Objekte eine weitere Unterteilung dieser Objekte bezüglich Mineraliengehalt bzw. Kunststoffgehalt vorgenommen wird.

10. Sortieranlage zur Durchführung eines Verfahrens nach einem der Ansprüche 1 bis 9, wobei diese zumindest umfasst:
- eine Anregungslichtquelle (3), mit welcher ein einschichtiger Materialstrom von Objekten (12) beleuchtet werden kann,
- einen ersten Detektor (7) zum Detektieren des durch die Anregungslichtquelle (3) im Objekt (12) erzeugten Fluoreszenzlichts in Form einer Abbildung,
- eine Einrichtung zum Erstellen einer Abbildung der einzelnen Objekte (12),
- eine Einrichtung (6) zum Herstellen eines einschichtigen Materialstroms aus Objekten (12), mit welcher der Materialstrom an der Anregungslichtquelle (3) vorbeigeführt werden kann, sowie
- eine Einrichtung (16-18) zum Aussortieren, die dann ein Objekt (13) als ein bestimmtes Mineral bzw. einen bestimmten Kunststoff enthaltend definiert und von anderen Objekten (14) des Materialstroms trennt, wenn das Fluoreszenzlicht dieses Objekts (13) für zumindest einen vorbestimmten Wellenlängenbereich in einem vorbestimmten Intensitätsbereich liegt.

11. Sortieranlage nach Anspruch 10, **dadurch gekennzeichnet, dass** die Einrichtung zum Erstellen einer Abbildung der einzelnen Objekte (12) Folgendes umfasst:
- eine zweite Lichtquelle (4), die UV-Licht und/oder sichtbares und/oder IR-Licht außerhalb des Fluoreszenzlichts aussenden kann, und/oder
- einen zweiten Detektor (8) zum Detektieren des Transmissionslichts der gegebenenfalls zweiten Lichtquelle (4) oder der Anregungslichtquelle (3), nach dem Durchgang zwischen den Objekten (12), oder zum Detektieren des Reflexionslichts der durch die gegebenenfalls zweite Lichtquelle (4) oder der Anregungslichtquelle (3) bestrahlten Objekte (12).

12. Sortieranlage nach Anspruch 11, **dadurch gekennzeichnet, dass** sich Anregungslichtquelle (3) und der erste Detektor (7) auf der gleichen Seite des Materialstroms befinden.

13. Sortieranlage nach einem der Ansprüche 11 bis 12, **dadurch gekennzeichnet, dass** der zweite Detektor (8) ein Detektor für UV-Licht ist.

14. Sortieranlage nach einem der Ansprüche 11 bis 13, **dadurch gekennzeichnet, dass** eine zweite Lichtquelle (4), vorgesehen ist, die sichtbares und/oder IR-Licht aussenden kann.

## Claims

1. Method for sorting out mineral-containing objects or plastic objects from a single layer material stream, whereas objects (12) of the material stream are irradiated with stimulating light, and the resulting fluorescent light is detected in the form of an image of the fluorescent points, whereas the objects of the material stream are irradiated with object detection light outside the fluorescent light, and the transmitted light after passage between objects or the reflected light of the objects is detected in the form of an image of the individual objects,
whereas an object is then defined as containing at least a specific mineral or a specific plastic when the fluorescent light of said object lies in a predetermined intensity range for at least one predetermined wavelength range, and whereas objects defined in this way are separated from other objects of the material stream.

2. Method as in Claim 1, **characterized in that** the stimulating light is UV light.

3. Method as in Claim 1, **characterized in that** the stimulating light is visible light.

4. Method as in one of Claims 1 to 3, **characterized in that** the object detection light comprises additional UV light, and/or visible and/or IR light.

5. Method as in one of Claims 1 to 4, **characterized in that** the stimulating light is also used as object detection light.

6. Method as in one of Claims 1 to 5, **characterized in that** the fluorescent light on the one hand and the transmitted or reflected light of the object detection light on the other are detected in the form of a joint image with the same detector.

7. Method as in one of Claims 1 to 6, **characterized in that** the image of an object is divided into a plurality of partial regions and a partial region is defined as containing a specific mineral or a specific plastic when the fluorescent light from said partial region lies in a predetermined wavelength and intensity range.

8. Method as in Claim 7, **characterized in that** an object is defined as containing a specific mineral or a specific plastic if the sum of the partial regions that contain the specific mineral or specific plastic, in a ratio to a reference surface, such as the total surface of the image of the object, exceeds a predetermined threshold of the intensity.

9. Method as in one of Claims 1 to 8, **characterized in that** on the basis of the intensity of the fluorescent light in the predetermined intensity range for objects containing a specific mineral or a specific plastic, a further subdivision of said objects with respect to mineral content or plastic content is carried out.

10. Sorting plant for conducting a method as in one of Claims 1 to 9, whereas it comprises at least
- a stimulating light source (3), with which a single layer material stream of objects (12) can be illuminated,
- a first detector (7) for detection of the fluorescent light generated in the object (12) by the stimulating light source (3), in the form of an image,
- a device for creating an image of the individual objects (12),
- a device (6) for producing a single layer material stream of objects (12), with which the material stream can be transported past the stimulating light source (3), and
- a device (16-18) for sorting out, which then defines an object (13) as containing a specific mineral or a specific plastic and separates it from other objects (14) of the material stream if the fluorescent light of said object (13) lies in a predetermined intensity range for at least one predetermined wavelength range.

11. Sorting plant as in Claim 10, **characterized in that** the device for creating an image of the individual objects (12) comprises the following:
- a second light source (4), which can emit UV light and/or visible and/or IR light outside the fluorescent light, and/or
- a second detector (8) for detection of the transmitted light of the optional second light source (4) or the stimulating light source (3), after passing between the objects (12), or for detection of the reflected light of the objects (12) irradiated by the optional second light source (4) or the stimulating light source (3).

12. Sorting plant as in Claim 11, **characterized in that** the stimulating light source (3) and the first detector (7) are situated on the same side of the material stream.

13. Sorting plant as in one of Claims 11 to 12, **characterized in that** the second detector (8) is a detector for UV light.

14. Sorting plant as in one of Claims 11 to 13, **characterized in that** a second light source (4) that can emit visible and/or IR light is provided.

## Revendications

1. Procédé pour l'exclusion d'objets contenant des minéraux ou d'objets en matière plastique dans un flux de matériaux en une couche, dans lequel les objets (12) du flux de matériaux sont exposés à une lumière d'excitation et la lumière fluorescente en résultant est détectée sous la forme d'une représentation des zones fluorescentes, les objets du flux de matériaux étant exposés à une lumière de reconnaissance des objets en dehors de la lumière fluorescente et la lumière transmise passant entre les objets ou la lumière réfléchie par les objets étant détectée sous la forme d'une représentation des différents objets,
dans lequel un objet est défini comme contenant au moins un minéral donné ou une matière plastique donnée quand la lumière fluorescente de cet objet se situe dans une plage d'intensité prédéterminée pour au moins une plage de longueurs d'onde prédéterminée, et dans lequel les objets ainsi définis sont séparés des autres objets du flux de matériaux.

2. Procédé selon la revendication 1, **caractérisé en ce que** la lumière d'excitation est de la lumière UV.

3. Procédé selon la revendication 1, **caractérisé en ce que** la lumière d'excitation est de la lumière visible.

4. Procédé selon l'une des revendications 1 à 3, **caractérisé en ce que** la lumière de reconnaissance des objets contient une lumière UV supplémentaire et/ou une lumière visible et/ou une lumière IR.

5. Procédé selon l'une des revendications 1 à 4, **caractérisé en ce que** la lumière d'excitation est aussi utilisée comme lumière de reconnaissance des objets.

6. Procédé selon la revendication selon l'une des revendications 1 à 5, **caractérisé en ce que** la lumière fluorescente, d'une part, et la part transmise ou réfléchie de la lumière de reconnaissance des objets, d'autre part, sont captées par le même détecteur sous la forme d'une représentation commune.

7. Procédé selon l'une des revendications 1 à 6, **caractérisé en ce que** la représentation des objets est divisée en plusieurs zones partielles et une zone partielle est définie comme contenant un minéral ou une matière plastique donnés si la lumière fluorescente provenant de cette zone partielle se situe dans une plage de longueur d'onde et d'intensité prédéterminée.

8. Procédé selon la revendication 7, **caractérisé en ce qu'**un objet est défini comme contenant un minéral ou une matière plastique donnés si la somme des zones partielles qui contiennent le minéral ou la matière plastique définis dépasse un seuil d'intensité prédéterminé par rapport à une surface de référence telle que la surface totale de la représentation de l'objet.

9. Procédé selon l'une des revendications 1 à 8, **caractérisé en ce que** les objets contenant un minéral ou une matière plastique déterminés sont encore subdivisés en fonction de l'intensité de la lumière fluorescente selon leur teneur en minéral ou leur teneur en matière plastique.

10. Installation de tri pour la mise en oeuvre d'un procédé selon l'une des revendications 1 à 9, comprenant au moins :
- une source de lumière d'excitation (3) avec laquelle un flux de matériaux en une couche formé d'objets (12) peut être éclairé,
- un premier détecteur (7) pour détecter la lumière fluorescente produite par la source de lumière d'excitation (3) dans l'objet (12) sous la forme d'une représentation,
- un dispositif pour créer une représentation des différents objets (12),
- un dispositif (6) pour produire un flux de matériaux en une couche avec des objets (12), à l'aide duquel le flux de matériaux peut être guidé devant la source de lumière d'excitation (3), et
- un dispositif (16-18) d'exclusion qui définit qu'un objet (13) contient un certain minéral ou une certaine matière plastique et le sépare d'autres objets (14) du flux de matériaux quand la lumière fluorescente de cet objet (13) se situe dans une plage d'intensité prédéterminée, au moins dans une plage de longueurs d'onde prédéterminée.

11. Installation de tri selon la revendication 10, **caractérisée en ce que** le dispositif pour créer une représentation des différents objets (12) comprend :
- une deuxième source de lumière (4) qui peut émettre de la lumière UV et/ou visible et/ou IR en dehors de la lumière fluorescente, et/ou
- un deuxième détecteur (8) pour la détection de la lumière transmise de la deuxième source de lumière (4) éventuelle ou de la source de lumière d'excitation (3) après qu'elle est passée entre les objets (12), ou pour la détection de la lumière réfléchie par les objets (12) éclairés par la deuxième source de lumière (4) éventuelle ou la source de lumière d'excitation (3).

12. Installation de tri selon la revendication 11, **caractérisée en ce que** la source de lumière d'excitation (3) et le premier détecteur (7) se trouvent sur le même côté du flux de matériaux.

13. Installation de tri selon l'une des revendications 11 à 12, **caractérisée en ce que** le deuxième détecteur (8) est un détecteur de lumière UV.

14. Installation de tri selon l'une des revendications 11 à 13, **caractérisée en ce qu'**il est prévu une deuxième source de lumière (4) capable d'émettre de la lumière visible et/ou IR.
